# EUROPEAN PATENT SPECIFICATION

(11) **EP 3 053 892 B1**
(45) Date of publication and mention of the grant of the patent: **20.10.2021**
(21) Application number: 14849405.7
(22) Date of filing: 30.09.2014
(51) Int. Cl.: C03C 27/12, B32B 17/04, B32B 27/30, C08L 29/14, B32B 7/02

(54) **INTERMEDIATE FILM FOR LAMINATED GLASS, AND LAMINATED GLASS**
ZWISCHENFOLIE FÜR VERBUNDGLAS UND VERBUNDGLAS
FILM INTERMÉDIAIRE POUR VERRE FEUILLETÉ, ET VERRE FEUILLETÉ

(30) Priority: 30.09.2013 JP 2013205104
(43) Date of publication of application: 10.08.2016
(73) Proprietor: Sekisui Chemical Co., Ltd., Osaka-shi, Osaka 530-8565 (JP)
(72) Inventor: IWAMOTO, Tatsuya, Kouka-shi Shiga 528-8585 (JP); UCHIMURA, Yuji, Kouka-shi Shiga 528-8585 (JP)
(74) Representative: Ter Meer Steinmeister & Partner
(86) International application number: PCT/JP2014/076144
(87) International publication number: WO 2015/046585

(56) References cited:
- EP-A1- 0 566 890
- WO-A1-2011/078314
- JP-A- H06 926
- US-A1- 2012 288 722
- None

## Description

### TECHNICAL FIELD

The present invention relates to an interlayer film for laminated glass used for laminated glass. Moreover, the present invention relates to laminated glass prepared with the interlayer film for laminated glass.

### BACKGROUND ART

Since laminated glass generates only a small amount of scattering glass fragments even when subjected to external impact and broken, laminated glass is excellent in safety. As such, the laminated glass is widely used for automobiles, railway vehicles, aircraft, ships, buildings and the like. The laminated glass is produced by sandwiching an interlayer film for laminated glass between a pair of glass plates.

Patent Document 1 below discloses an interlayer film with which the sound insulating properties in a high frequency area of laminated glass can be enhanced over a wide temperature range. This interlayer film is provided with a first layer including a polyvinyl acetal resin and a plasticizer, a second layer being layered on a first surface of the first layer and including a polyvinyl acetal resin and a plasticizer, and a third layer being layered on a second surface opposite to the first surface of the first layer and including a polyvinyl acetal resin and a plasticizer. In this interlayer film, the hydroxyl content of the polyvinyl acetal resin included in the first layer is deteriorated than each of the hydroxyl contents of the polyvinyl acetal resins included in the second and third layers, and the ratio of the thickness of the first layer to the total thickness of the second layer and the third layer is less than or equal to 0.14.

Patent Document 2 below discloses an interlayer film which is capable of enhancing the penetration resistance over a wide temperature range. In Patent Document 2, for the purpose of enhancing the penetration resistance, a technique for making the number of carbon atoms of acetal group in the polyvinyl acetal resin smaller or using a coacetalized resin prepared with an aldehyde having a small number of carbon atoms is described.

### Related Art Document

### Patent Documents

Patent Document 1: WO 2012/043816 A1
Patent Document 2: WO 2006/038332 A1

Multilayer interlayer films are also disclosed in US 2012/288722 A1 and in EP 0 566 890 A1.

### SUMMARY OF THE INVENTION

### PROBLEMS TO BE SOLVED BY THE INVENTION

In recent years, for the purpose of attaining reduced weight of laminated glass, a technique for thinning the laminated glass in thickness has been studied. However, when the thickness of laminated glass is thinned, there is a problem that the penetration resistance of the laminated glass is liable to be lowered.

Accordingly, the development of an interlayer film allowing the penetration resistance to be further enhanced as compared with a conventional interlayer film has been desired.

An object of the present invention is to provide an interlayer film for laminated glass with which the penetration resistance of laminated glass can be enhanced. Moreover, the present invention is also aimed at providing laminated glass prepared with the interlayer film for laminated glass.

### MEANS FOR SOLVING THE PROBLEMS

According to a broad aspect of the present invention, there is provided an interlayer film for laminated glass as defined in appended claim 1. Further, preferred embodiments are covered by the dependent claims.

The invention concerns also a laminated glass as defined in claim 14.

The penetration resistance of laminated glass prepared with the interlayer film for laminated glass according to the present invention can be enhanced.

### BRIEF DESCRIPTION OF DRAWINGS

[Fig. 1] Fig. 1 is a partially cut-away cross-sectional view schematically showing an interlayer film for laminated glass in accordance with one embodiment of the present invention.
[Fig. 2] Fig. 2 is a partially cut-away cross-sectional view schematically showing an example of laminated glass prepared with the interlayer film for laminated glass shown in Fig. 1.

### MODE(S) FOR CARRYING OUT THE INVENTION

Hereinafter, the present invention will be described with reference to drawings based on specific embodiments and examples of the present invention.

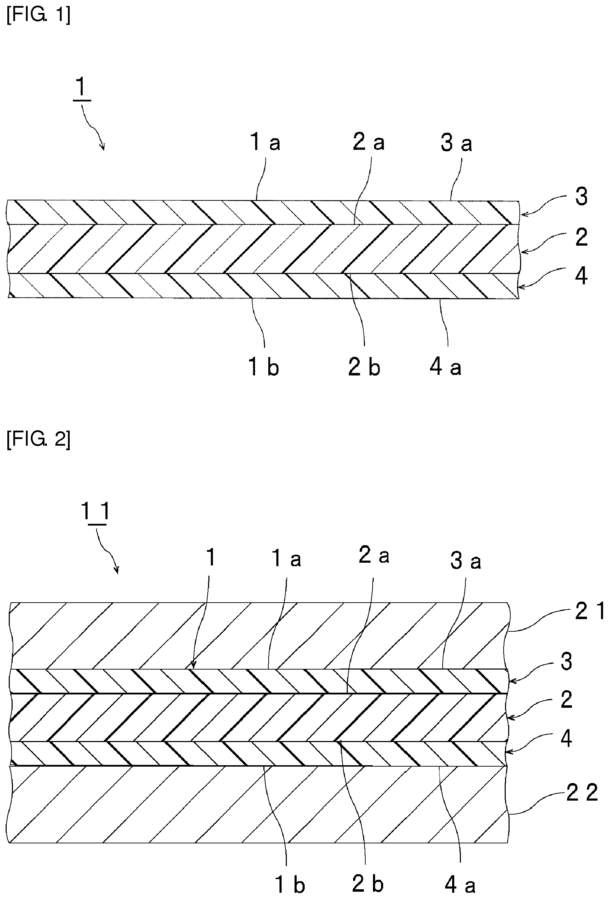

Fig. 1 shows an interlayer film for laminated glass in accordance with one embodiment of the present invention schematically represented as a partially cut-away cross-sectional view.

An interlayer film 1 shown in Fig. 1 is a multi-layered interlayer film having a three or more-layered structure. The interlayer film 1 is used for obtaining laminated glass. The interlayer film 1 is an interlayer film for laminated glass. The interlayer film 1 is provided with a first layer 2, a second layer 3 arranged on a first surface 2a side of the first layer 2, and a third layer 4 arranged on a second surface 2b side opposite to the first surface 2a of the first layer 2. The second layer 3 is layered on the first surface 2a of the first layer 2. The third layer 4 is layered on the second surface 2b of the first layer 2. The first layer 2 is an intermediate layer. For example, the second layer 3 and the third layer 4 are protective layers and are surface layers in the present invention. The first layer 2 is arranged between the second layer 3 and the third layer 4 to be sandwiched. Accordingly, the interlayer film 1 has a multilayer structure in which the second layer 3, the first layer 2 and the third layer 4 are layered in this order.

It is preferred that a surface 3a at a side opposite to the first layer 2 side of the second layer 3 be a surface on which a laminated glass member is layered. It is preferred that a surface 4a at a side opposite to the first layer 2 side of the third layer 4 be a surface on which a laminated glass member is layered.

Other layers may be arranged between the first layer 2 and the second layer 3 and between the first layer 2 and the third layer 4, respectively. It is preferred that each of the second layer 3 and the third layer 4 be directly layered on the first layer 2. Examples of the other layers include a layer including a thermoplastic resin such as a polyvinyl acetal resin and a layer including polyethylene terephthalate and the like.

The first layer 2, the second layer 3 and the third layer 4 each include a polyvinyl acetal resin and a plasticizer. The hydroxyl content of the polyvinyl acetal resin included in the first layer 2 is higher than the hydroxyl content of the polyvinyl acetal resin included in the second layer 3. The content of the plasticizer included in the first layer 2 relative to 100 parts by weight of the polyvinyl acetal resin included in the first layer 2 is less than the content of the plasticizer included in the second layer 3 relative to 100 parts by weight of the polyvinyl acetal resin included in the second layer 3.

Since the interlayer film 1 is provided with the above-described configuration, it is possible to enhance the penetration resistance of laminated glass prepared with the interlayer film 1. When interlayer films which are the same as each other in thickness are compared for the penetration resistance, the penetration resistance of an interlayer film provided with the above-described configuration is more enhanced than the penetration resistance of an interlayer film not provided with the above-described configuration. Moreover, even when the thickness of the interlayer film 1 is thinned, and also even when the thickness of laminated glass prepared with the interlayer film 1 is thinned, sufficiently enhanced penetration resistance can be maintained.

In the interlayer film 1, each of the second layer 3 and the third layer 4 is layered on each of both faces of the first layer. The second layer is arranged on the first surface side of the first layer, and the third layer is arranged on the second surface side of the first layer. By arranging the third layer on the second surface side of the first layer, the flexibility of the interlayer film is enhanced and the handling of the interlayer film is facilitated. Furthermore, at the surfaces of both sides of the interlayer film, the adhesiveness to a laminated glass member and the like can be adjusted.

From the viewpoint of further enhancing the penetration resistance of laminated glass prepared with the interlayer film, the third layer includes a polyvinyl acetal resin and a plasticizer. From the viewpoint of further enhancing the penetration resistance of laminated glass prepared with the interlayer film, it is preferred that the hydroxyl content of the polyvinyl acetal resin included in the first layer be higher than the hydroxyl content of the polyvinyl acetal resin included in the third layer. From the viewpoint of further enhancing the penetration resistance of laminated glass prepared with the interlayer film, it is preferred that the content of the plasticizer included in the first layer relative to 100 parts by weight of the polyvinyl acetal resin included in the first layer be less than the content of the plasticizer included in the third layer relative to 100 parts by weight of the polyvinyl acetal resin included in the third layer.

Hereinafter, the details of the first layer, the second layer and the third layer which constitute the interlayer film for laminated glass according to the present invention, and the details of each ingredient included in the first layer, the second layer and the third layer will be described.

### (Polyvinyl acetal resin)

The first layer includes a polyvinyl acetal resin (hereinafter, may be described as a polyvinyl acetal resin (1)). The second layer includes a polyvinyl acetal resin (hereinafter, may be described as a polyvinyl acetal resin (2)). The third layer includes a polyvinyl acetal resin (hereinafter, may be described as a polyvinyl acetal resin (3)). The polyvinyl acetal resin (2) and the polyvinyl acetal resin (3) may be the same as or different from each other. One kind of each of the polyvinyl acetal resin (1), the polyvinyl acetal resin (2) and the polyvinyl acetal resin (3) may be used alone, and two or more kinds thereof may be combinedly used.

For example, the polyvinyl acetal resin can be produced by acetalizing polyvinyl alcohol with an aldehyde. For example, the polyvinyl alcohol is obtained by saponifying polyvinyl acetate. The saponification degree of the polyvinyl alcohol generally falls within the range of 70 to 99.9% by mol.

The average polymerization degree of the polyvinyl alcohol is preferably greater than or equal to 200, more preferably greater than or equal to 500, further preferably greater than or equal to 1000, especially preferably greater than or equal to 1300, most preferably greater than or equal to 1500, preferably less than or equal to 3000, more preferably less than or equal to 2700, and further preferably less than or equal to 2400. When the average polymerization degree is greater than or equal to the above lower limit, the penetration resistance of laminated glass is further enhanced. When the average polymerization degree is less than or equal to the above upper limit, the resin is easily formed into an interlayer film.

From the viewpoint of further enhancing the penetration resistance of laminated glass, it is especially preferred that the average polymerization degree of the polyvinyl alcohol be greater than or equal to 1500 and less than or equal to 3000.

The average polymerization degree of the polyvinyl alcohol is determined by a method in accordance with JIS K6726 "Testing methods for polyvinyl alcohol".

The number of carbon atoms of the acetal group contained in the polyvinyl acetal resin is not particularly limited. The aldehyde used at the time of producing the polyvinyl acetal resin is not particularly limited. It is preferred that the number of carbon atoms of the acetal group in the polyvinyl acetal resin be within the range of 3 to 5, and it is preferred that the number of carbon atoms of the acetal group be 3 or 4. When the number of carbon atoms of the acetal group in the polyvinyl acetal resin is greater than or equal to 3, the glass transition temperature of the interlayer film is sufficiently lowered. It is preferred that the polyvinyl acetal resin be a polyvinyl butyral resin.

The aldehyde is not particularly limited. In general, as the aldehyde, an aldehyde with 1 to 10 carbon atoms is suitably used. Examples of the aldehyde with 1 to 10 carbon atoms include formaldehyde, acetaldehyde, propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, benzaldehyde, and the like. Of these, propionaldehyde, n-butyraldehyde, isobutyraldehyde, n-hexylaldehyde or n-valeraldehyde is preferred, propionaldehyde, n-butyraldehyde or isobutyraldehyde is more preferred, and n-butyraldehyde is further preferred. One kind of the aldehyde may be used alone and two or more kinds thereof may be combinedly used.

The hydroxyl content (the amount of hydroxyl groups) of the polyvinyl acetal resin (1) is preferably greater than or equal to 31.5% by mol, more preferably greater than or equal to 32% by mol, further preferably greater than or equal to 32.5% by mol, especially preferably greater than 34% by mol, preferably less than or equal to 36.5% by mol, more preferably less than or equal to 36% by mol, and further preferably less than or equal to 33.9% by mol. When the hydroxyl content is greater than or equal to the above lower limit, the mechanical strength of the interlayer film is further enhanced and the penetration resistance of laminated glass is further enhanced. In particular, when the hydroxyl content of the polyvinyl acetal resin (1) is greater than or equal to 31.5% by mol, the penetration resistance of laminated glass is effectively enhanced. Since the penetration resistance of laminated glass is further enhanced, it is preferred that the hydroxyl content of the polyvinyl acetal resin (1) be greater than 34% by mol. Moreover, when the hydroxyl content is less than or equal to the above upper limit, the flexibility of the interlayer film is enhanced and the handling of the interlayer film is facilitated.

The hydroxyl content of each of the polyvinyl acetal resin (2) and the polyvinyl acetal resin (3) is preferably greater than or equal to 28% by mol, more preferably greater than or equal to 28.5% by mol, further preferably greater than or equal to 29% by mol, especially preferably greater than 29.5% by mol, preferably less than or equal to 32% by mol, more preferably less than or equal to 31% by mol, and further preferably less than or equal to 30.5% by mol. When the hydroxyl content is greater than or equal to the above lower limit, the mechanical strength of the interlayer film is further enhanced. Moreover, when the hydroxyl content is less than or equal to the above upper limit, the flexibility of the interlayer film is enhanced and the handling of the interlayer film is facilitated.

For the purpose of enhancing the penetration resistance of laminated glass, the hydroxyl content of the polyvinyl acetal resin (1) is higher than the hydroxyl content of the polyvinyl acetal resin (2). From the viewpoint of further enhancing the penetration resistance of laminated glass, it is preferred that the hydroxyl content of the polyvinyl acetal resin (1) be higher than the hydroxyl content of the polyvinyl acetal resin (3).

From the viewpoint of further enhancing the penetration resistance of laminated glass, each of the absolute value of the difference between the hydroxyl content of the polyvinyl acetal resin (1) and the hydroxyl content of the polyvinyl acetal resin (2) and the absolute value of the difference between the hydroxyl content of the polyvinyl acetal resin (1) and the hydroxyl content of the polyvinyl acetal resin (3) is greater than or equal to 1% by mol, preferably greater than or equal to 1.5% by mol, further preferably greater than or equal to 2% by mol, especially preferably greater than or equal to 3% by mol, and most preferably greater than or equal to 3.1% by mol. Each of the absolute value of the difference between the hydroxyl content of the polyvinyl acetal resin (1) and the hydroxyl content of the polyvinyl acetal resin (2) and the absolute value of the difference between the hydroxyl content of the polyvinyl acetal resin (1) and the hydroxyl content of the polyvinyl acetal resin (3) is preferably less than or equal to 8.5% by mol, more preferably less than or equal to 7% by mol, further preferably less than or equal to 6% by mol, especially preferably less than or equal to 5% by mol, and most preferably less than or equal to 4.8% by mol. Since the penetration resistance is further enhanced, it is preferred that each of the absolute value of the difference between the hydroxyl content of the polyvinyl acetal resin (1) and the hydroxyl content of the polyvinyl acetal resin (2) and the absolute value of the difference between the hydroxyl content of the polyvinyl acetal resin (1) and the hydroxyl content of the polyvinyl acetal resin (3) be greater than 3% by mol.

The hydroxyl content of the polyvinyl acetal resin is a value expressing the molar fraction determined by dividing the amount of ethylene groups to which the hydroxyl group is bonded by the total amount of ethylene groups in the main chain in terms of percentage. For example, the amount of ethylene groups to which the hydroxyl group is bonded can be measured in accordance with JIS K6728 "Testing methods for polyvinyl butyral".

The acetylation degree (the amount of acetyl groups) of the polyvinyl acetal resin (1) is preferably greater than or equal to 0.3% by mol, more preferably greater than or equal to 0.5% by mol, further preferably greater than or equal to 0.7% by mol, especially preferably greater than or equal to 1.1% by mol, preferably less than or equal to 8% by mol, more preferably less than or equal to 5% by mol, further preferably less than or equal to 2% by mol, and especially preferably less than or equal to 1.8% by mol. When the acetylation degree is greater than or equal to the above lower limit, the compatibility between the polyvinyl acetal resin and a plasticizer is enhanced. When the acetylation degree is less than or equal to the above upper limit, the mechanical strength of the interlayer film is further enhanced.

The acetylation degree of each of the polyvinyl acetal resin (2) and the polyvinyl acetal resin (3) is preferably greater than or equal to 0.3% by mol, more preferably greater than or equal to 0.5% by mol, further preferably greater than or equal to 0.8% by mol, is less than or equal to 2% by mol, and preferably less than or equal to 1.8% by mol. When the acetylation degree is greater than or equal to the above lower limit, the compatibility between the polyvinyl acetal resin and a plasticizer is enhanced. When the acetylation degree is less than or equal to the above upper limit, the mechanical strength of the interlayer film is further enhanced. It is preferred that the acetylation degree of the polyvinyl acetal resin (1) be different from the acetylation degree of each of the polyvinyl acetal resin (2) and the polyvinyl acetal resin (3). Each of the absolute value of the difference between the acetylation degree of the polyvinyl acetal resin (1) and the acetylation degree of the polyvinyl acetal resin (2) and the absolute value of the difference between the acetylation degree of the polyvinyl acetal resin (1) and that of the polyvinyl acetal resin (3) is preferably greater than or equal to 0.1% by mol, and more preferably greater than or equal to 0.2% by mol.

The acetylation degree is a value expressing the molar fraction determined by dividing a value obtained by subtracting the amount of ethylene groups to which the acetal group is bonded and the amount of ethylene groups to which the hydroxyl group is bonded from the total amount of ethylene groups in the main chain by the total amount of ethylene groups in the main chain in terms of percentage. For example, the amount of ethylene groups to which the acetal group is bonded can be measured in accordance with JIS K6728 "Testing methods for polyvinyl butyral".

The acetalization degree of the polyvinyl acetal resin (1) (the butyralization degree in the case of a polyvinyl butyral resin) is preferably greater than or equal to 61.5% by mol, more preferably greater than or equal to 61.7% by mol, further preferably greater than or equal to 62% by mol, preferably less than or equal to 69% by mol, more preferably less than or equal to 68.2% by mol, further preferably less than or equal to 68% by mol, especially preferably less than or equal to 67% by mol, and most preferably less than or equal to 64.9% by mol. When the acetalization degree is greater than or equal to the above lower limit, the compatibility between the polyvinyl acetal resin and a plasticizer is enhanced. When the acetalization degree is less than or equal to the above upper limit, the reaction time required for producing the polyvinyl acetal resin is shortened.

The acetalization degree of each of the polyvinyl acetal resin (2) and the polyvinyl acetal resin (3) (the butyralization degree in the case of a polyvinyl butyral resin) is preferably greater than or equal to 65% by mol, more preferably greater than or equal to 67% by mol, further preferably greater than or equal to 67.2% by mol, especially preferably greater than or equal to 68. 1% by mol, preferably less than or equal to 71.7% by mol, more preferably less than or equal to 71.5% by mol, and further preferably less than or equal to 70% by mol. When the acetalization degree is greater than or equal to the above lower limit, the compatibility between the polyvinyl acetal resin and a plasticizer is enhanced. When the acetalization degree is less than or equal to the above upper limit, the reaction time required for producing the polyvinyl acetal resin is shortened.

The acetalization degree is a value expressing the molar fraction determined by dividing the amount of ethylene groups to which the acetal group is bonded by the total amount of ethylene groups in the main chain in terms of percentage. The acetalization degree can be calculated by a method in accordance with JIS K6728 "Testing methods for polyvinyl butyral".

It is preferred that the hydroxyl content (the amount of hydroxyl groups), the acetalization degree (the butyralization degree) and the acetylation degree be calculated from the results measured by a method in accordance with JIS K6728 "Testing methods for polyvinyl butyral". However, the measurement by ASTM D1396-92 or JIS K6728 may be employed. In the case where the polyvinyl acetal resin is a polyvinyl butyral resin, the hydroxyl content (the amount of hydroxyl groups), the acetalization degree (the butyralization degree) and the acetylation degree can be calculated from the results measured by a method in accordance with JIS K6728 "Testing methods for polyvinyl butyral".

### (Plasticizer)

The first layer includes a plasticizer (hereinafter, may be described as a plasticizer (1)). The second layer includes a plasticizer (hereinafter, may be described as a plasticizer (2)). The third layer includes a plasticizer (hereinafter, may be described as a plasticizer (3)). By using a polyvinyl acetal resin and a plasticizer together, the adhesive force of a layer including the polyvinyl acetal resin and the plasticizer to a laminated glass member or another layer is moderately enhanced. The plasticizer is not particularly limited. The plasticizer (1), the plasticizer (2) and the plasticizer (3) may be the same as or different from one another. One kind of the plasticizer may be used alone and two or more kinds thereof may be combinedly used.

Examples of the plasticizer include organic ester plasticizers such as a monobasic organic acid ester and a polybasic organic acid ester, organic phosphate plasticizers such as an organic phosphate plasticizer and an organic phosphite plasticizer, and the like. Of these, organic ester plasticizers are preferred. It is preferred that the plasticizer be a liquid plasticizer.

Examples of the monobasic organic acid ester include a glycol ester obtained by the reaction of a glycol with a monobasic organic acid, and the like. Examples of the glycol include triethylene glycol, tetraethylene glycol, tripropylene glycol and the like. Examples of the monobasic organic acid include butyric acid, isobutyric acid, caproic acid, 2-ethylbutyric acid, hepthylic acid, n-octylic acid, 2-ethylhexanoic acid, n-nonylic acid, decylic acid, and the like.

Examples of the polybasic organic acid ester include ester compounds of a polybasic organic acid and an alcohol having a linear or branched structure of 4 to 8 carbon atoms, and the like. Examples of the polybasic organic acid include adipic acid, sebacic acid, azelaic acid, and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyd, a mixture of a phosphoric acid ester and an adipic acid ester, and the like. Organic ester plasticizers other than these may be used. Other adipic acid esters other than the above-described adipic acid esters may be used.

Examples of the organic phosphate plasticizer include tributoxyethyl phosphate, isodecyl phenyl phosphate, triisopropyl phosphate, and the like.

It is preferred that the plasticizer be a diester plasticizer represented by the following formula (1).

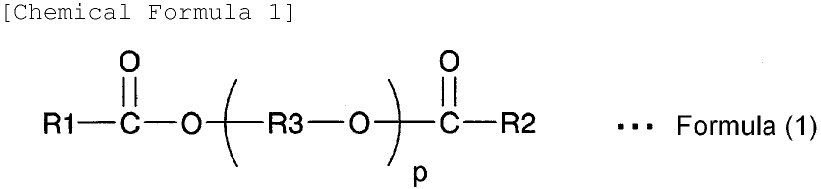

In the foregoing formula (1), R1 and R2 each represent an organic group with 2 to 10 carbon atoms, R3 represents an ethylene group, an isopropylene group or a n-propylene group, and p represents an integer of 3 to 10. It is preferred that R1 and R2 in the foregoing formula (1) each be an organic group with 5 to 10 carbon atoms, and it is more preferred that R1 and R2 each be an organic group with 6 to 10 carbon atoms.

It is preferred that the plasticizer be triethylene glycol di-2-ethylhexanoate (3GO), triethylene glycol di-2-ethylbutyrate (3GH) or triethylene glycol di-2-ethylpropanoate, it is more preferred that the plasticizer be triethylene glycol di-2-ethylhexanoate or triethylene glycol di-2-ethylbutyrate, and it is further preferred that the plasticizer be triethylene glycol di-2-ethylhexanoate.

The content of the plasticizer (1) relative to 100 parts by weight of the polyvinyl acetal resin (1) (hereinafter, may be described as the content (1)) is preferably greater than or equal to 20 parts by weight, more preferably greater than or equal to 25 parts by weight, further preferably greater than or equal to 27.1 parts by weight, preferably less than or equal to 35 parts by weight, more preferably less than or equal to 32 parts by weight, and further preferably less than or equal to 30 parts by weight. When the content (1) is greater than or equal to the above lower limit, the flexibility of the interlayer film is enhanced and the handling of the interlayer film is facilitated. When the content (1) is less than or equal to the above upper limit, the mechanical strength of the interlayer film is further enhanced and the penetration resistance of laminated glass is further enhanced. In particular, when the content (1) is less than or equal to 35 parts by weight, the penetration resistance of laminated glass is effectively enhanced.

Each of the content of the plasticizer (2) relative to 100 parts by weight of the polyvinyl acetal resin (2) (hereinafter, may be described as the content (2)) and the content of the plasticizer (3) relative to 100 parts by weight of the polyvinyl acetal resin (3) (hereinafter, may be described as the content (3)) is preferably greater than or equal to 32 parts by weight, more preferably greater than or equal to 35 parts by weight, further preferably greater than or equal to 37 parts by weight, especially preferably greater than or equal to 38 parts by weight, preferably less than or equal to 50 parts by weight, more preferably less than or equal to 45 parts by weight, further preferably less than or equal to 42 parts by weight, especially preferably less than or equal to 41 parts by weight, and most preferably less than or equal to 39.9 parts by weight. When each of the content (2) and the content (3) is greater than or equal to the above lower limit, the flexibility of the interlayer film is enhanced and the handling of the interlayer film is facilitated. When each of the content (2) and the content (3) is less than or equal to the above upper limit, the penetration resistance of laminated glass is further enhanced.

For the purpose of enhancing the penetration resistance of laminated glass, the content (1) is less than the content (2). From the viewpoint of enhancing the penetration resistance of laminated glass, it is preferred that the content (1) be less than the content (3).

From the viewpoint of further enhancing the penetration resistance of laminated glass, the absolute value of the difference between the content (1) and the content (2) is greater than or equal to 8 parts by weight, preferably greater than or equal to 8.1 parts by weight, and most preferably greater than or equal to 9 parts by weight and the absolute value of the difference between the content (1) and the content (3) is preferably greater than or equal to 2 parts by weight, more preferably greater than or equal to 5 parts by weight, further preferably greater than or equal to 8 parts by weight, especially preferably greater than or equal to 8.1 parts by weight, and most preferably greater than or equal to 9 parts by weight. Each of the absolute value of the difference between the content (1) and the content (2) and the absolute value of the difference between the content (1) and the content (3) is preferably less than or equal to 22 parts by weight, more preferably less than or equal to 20 parts by weight, further preferably less than or equal to 15 parts by weight, and especially preferably less than or equal to 12 parts by weight.

### (Other ingredients)

Each of the first layer, the second layer and the third layer may include additives such as an oxidation inhibitor, an ultraviolet ray shielding agent, a light stabilizer, a flame retardant, an antistatic agent, a pigment, a dye, an adhesive force regulating agent, a moisture-resistance improving agent, a fluorescent brightening agent, and an infrared ray absorber, as necessary. One kind of these additives may be used alone, and two or more kinds thereof may be combinedly used.

It is preferred that the second layer and the third layer include an adhesive force regulating agent. Although the adhesive force regulating agent is not particularly limited, for example, it is preferred that the adhesive force regulating agent be an alkali metal salt, an alkaline earth metal salt or a magnesium salt. Since the adhesive force of the second layer and the third layer can be easily controlled, it is preferred that the adhesive force regulating agent be a magnesium salt or a potassium salt, and it is more preferred that the adhesive force regulating agent be a magnesium salt of a carboxylic acid or a potassium salt of a carboxylic acid. Although the magnesium salt of a carboxylic acid is not particularly limited, examples thereof include magnesium acetate, magnesium propionate, magnesium 2-ethylbutanoate, magnesium 2-ethylhexanoate, and the like. The content of the magnesium element in the second layer and the third layer is preferably less than or equal to 200 ppm, more preferably less than or equal to 150 ppm, further preferably less than or equal to 100 ppm, and especially preferably less than or equal to 80 ppm. The magnesium element may be included as magnesium derived from a magnesium salt and may be included as magnesium derived from a neutralizing agent used at the time of synthesizing polyvinyl acetal. Although the potassium salt of a carboxylic acid is not particularly limited, examples thereof include potassium formate, potassium acetate, potassium propionate, potassium 2-ethylbutanoate, potassium 2-ethylhexanoate, and the like. The content of the potassium element in the second layer and the third layer is preferably less than or equal to 400 ppm, more preferably less than or equal to 300 ppm, further preferably less than or equal to 250 ppm, especially preferably less than or equal to 200 ppm, and most preferably less than or equal to 180 ppm. The potassium element may be included as potassium derived from a potassium salt and may be included as potassium derived from a neutralizing agent used at the time of synthesizing polyvinyl acetal. The content of the potassium element or the magnesium element can be measured by means of an ICP emission spectrometer ("ICPE-9000" available from SHIMADZU CORPORATION).

### (Other details of interlayer film for laminated glass)

The thickness of the interlayer film for laminated glass according to the present invention is not particularly limited. From the viewpoint of the practical aspect and the viewpoint of sufficiently enhancing the heat shielding properties, the thickness of the interlayer film is preferably greater than or equal to 0.1 mm, more preferably greater than or equal to 0.25 mm, preferably less than or equal to 3 mm, and more preferably less than or equal to 1.5 mm. When the thickness of the interlayer film is greater than or equal to the above lower limit, the penetration resistance of laminated glass is enhanced. When the thickness of the interlayer film is less than or equal to the above upper limit, the transparency of the interlayer film is further improved.

With regard to the interlayer film for laminated glass according to the present invention, the penetration resistance can be enhanced even when the thickness of the interlayer film is thinned. The thinner the thickness of an interlayer film is, the more laminated glass can be reduced in weight. From the viewpoint of further reducing laminated glass in weight while maintaining the penetration resistance high, the thickness of the interlayer film is preferably less than or equal to 700 µm, and more preferably less than or equal to 600 µm.

The thickness of the interlayer film is defined as T. From the viewpoint of further enhancing the penetration resistance of laminated glass, the thickness of the first layer is preferably greater than or equal to 0.14T, more preferably greater than or equal to 0.16T, preferably less than or equal to 0.72T, and more preferably less than or equal to 0.67T.

From the viewpoints of enhancing the flexibility of the interlayer film and facilitating the handling of the interlayer film, the thickness of each of the second layer and the third layer is preferably greater than or equal to 0.14T, more preferably greater than or equal to 0.16T, preferably less than or equal to 0.43T, and more preferably less than or equal to 0.42T. Moreover, when the thickness of each of the second layer and the third layer is greater than or equal to the above lower limit and less than or equal to the above upper limit, it is possible to suppress the bleed-out of the plasticizer.

From the viewpoint of further enhancing the penetration resistance of laminated glass, in the case where the interlayer film is provided with the second layer and the third layer, the total thickness of the second layer and the third layer is preferably greater than or equal to 0.28T, more preferably greater than or equal to 0.33T, preferably less than or equal to 0.86T, and more preferably less than or equal to 0.84T. Moreover, when the total thickness of the second layer and the third layer is greater than or equal to the above lower limit and less than or equal to the above upper limit, it is possible to suppress the bleed-out of the plasticizer.

In the case where laminated glass is used as a windshield of a vehicle such as an automobile, when the vehicle is involved in an accident or the like, the head of an occupant of the vehicle may collide with the windshield. In the case where the head of an occupant collides with the windshield, the occupant penetrates through the windshield and may jump out to the outside of the vehicle. For the purpose of protecting the safety of an occupant, it is preferred that the occupant be prevented from penetrating through the windshield even if the head of the occupant collides with the windshield. By adopting the interlayer film for laminated glass according to the present invention, it is possible to prevent the occupant from penetrating through the windshield. Since it is possible to prevent the occupant from penetrating through the windshield even when the thickness of the interlayer film is thinned, the thickness (= T) of the interlayer film is preferably less than or equal to 700 µm, and the thickness of the first layer is preferably thinner than the thickness of the second layer or the third layer, is more preferably thinner by greater than or equal to 10 µm, is especially preferably thinner by greater than or equal to 20 µm, and is most preferably thinner by greater than or equal to 30 µm. Similarly, since it is possible to prevent the occupant from penetrating through the windshield even when the thickness of the interlayer film is thinned, the preferred lower limit of the thickness of the first layer is 50 µm, the more preferred lower limit thereof is 100 µm, the especially preferred lower limit thereof is 150 µm, the preferred upper limit thereof is 400 µm, the more preferred upper limit thereof is 300 µm, the especially preferred upper limit thereof is 250 µm, and the most preferred upper limit thereof is 200 µm. Furthermore, the total thickness of the second layer and the third layer is preferably greater than or equal to 0.6T, more preferably greater than or equal to 0.65T, further preferably greater than or equal to 0.7T, preferably less than or equal to 0.9T, more preferably less than or equal to 0.85T, and further preferably less than or equal to 0.8T.

Although the production method of the interlayer film for laminated glass according to the present invention is not particularly limited, examples thereof include a method of separately forming respective resin compositions used for constituting respective layers into respective layers, and then, for example, layering the respective obtained layers, a method of co-extruding respective resin compositions used for constituting respective layers using an extruder and layering the respective layers, and the like. A production method of extrusion-molding is preferred because the method is suitable for continuous production.

It is preferred that the second layer and the third layer contain the same polyvinyl acetal resin, it is more preferred that the second layer and the third layer contain the same polyvinyl acetal resin and the same plasticizer, and it is further preferred that the second layer and the third layer be formed from the same resin composition, since these interlayer films are excellent in production efficiency.

### (Laminated glass)

Fig. 2 shows an example of laminated glass prepared with an interlayer film for laminated glass in accordance with one embodiment of the present invention schematically represented as a cross-sectional view.

A laminated glass 11 shown in Fig. 2 is provided with a first laminated glass member 21, a second laminated glass member 22 and an interlayer film 1. The interlayer film 1 is arranged between the first laminated glass member 21 and the second laminated glass member 22 to be sandwiched.

The first laminated glass member 21 is layered on a first surface 1a of the interlayer film 1. The second laminated glass member 22 is layered on a second surface 1b opposite to the first surface 1a of the interlayer film 1. The first laminated glass member 21 is layered on an outer surface 3a of the second layer 3 of the interlayer film 1. The second laminated glass member 22 is layered on an outer surface 4a of the third layer 4 of the interlayer film 1.

As described above, the laminated glass according to the present invention is provided with the first laminated glass member, the second laminated glass member and the interlayer film arranged between the first laminated glass member and the second laminated glass member, and the interlayer film is the interlayer film for laminated glass according to the present invention.

Examples of the laminated glass member include a glass plate and a PET (polyethylene terephthalate) film and the like. The laminated glass includes not only laminated glass in which an interlayer film is sandwiched between two glass plates but also laminated glass in which an interlayer film is sandwiched between a glass plate and a PET film or the like. Laminated glass is a laminate provided with a glass plate, and it is preferred that at least one glass plate be used. It is preferred that the first laminated glass member and the second laminated glass member be each a glass plate or a PET film and at least one among the first laminated glass member and the second laminated glass member be a glass plate.

Examples of the glass plate include an inorganic glass plate and an organic glass plate. Examples of the inorganic glass plate include float plate glass, heat ray-absorbing plate glass, heat ray-reflecting plate glass, polished plate glass, molded plate glass, net-reinforced plate glass, wired plate glass, and the like. The organic glass is synthetic resin glass substituted for inorganic glass. Examples of the organic glass plate include a polycarbonate plate, a poly(meth)acrylic resin plate, and the like. Examples of the poly(meth)acrylic resin plate include a polymethyl (meth) acrylate plate, and the like.

The thickness of the laminated glass member is preferably greater than or equal to 1 mm, preferably less than or equal to 5 mm, and more preferably less than or equal to 3 mm. Moreover, in the case where the laminated glass member is a glass plate, the thickness of the glass plate is preferably greater than or equal to 1 mm, preferably less than or equal to 5 mm, and more preferably less than or equal to 3 mm. In the case where the laminated glass member is a PET film, the thickness of the PET film is preferably greater than or equal to 0.03 mm and preferably less than or equal to 0.5 mm.

The production method of the laminated glass is not particularly limited. For example, an interlayer film is sandwiched between the first laminated glass member and the second laminated glass member, and the air remaining between each of the first laminated glass member and the second laminated glass member and the interlayer film is removed by allowing the members to pass through a pressing roll or by putting the members into a rubber bag and allowing the contents to be sucked under reduced pressure. Afterward, the members are preliminarily bonded together at about 70 to 110°C to obtain a laminate. Next, by putting the laminate into an autoclave or by pressing the laminate, the members are press-bonded together at about 120 to 150°C and under a pressure of 1 to 1.5 MPa. In this way, laminated glass can be obtained.

The interlayer film and the laminated glass can be used for automobiles, railway vehicles, aircraft, ships, buildings and the like. The interlayer film and the laminated glass can also be used for applications other than these applications. It is preferred that the interlayer film and the laminated glass be an interlayer film and laminated glass for vehicles or for construction, and it is more preferred that the interlayer film and the laminated glass be an interlayer film and laminated glass for vehicles . The interlayer film and the laminated glass can be used for a windshield, side glass, rear glass or roof glass of an automobile, and the like. The interlayer film and the laminated glass are suitably used for automobiles.

Hereinafter, the present invention will be described in more detail with reference to examples. The present invention is not limited only to these examples. The invention is defined in the appended claims. Any disclosure lying outside the scope of said claims is only intended for illustrative as well as comparative purposes.

With regard to the polyvinyl butyral (PVB) resin used in the following examples and comparative examples, the butyralization degree (the acetalization degree), the acetylation degree and the hydroxyl content were measured by a method in accordance with JIS K6728 "Testing methods for polyvinyl butyral". Even in the cases of being measured according to ASTM D1396-92, numerical values similar to those obtained by a method in accordance with JIS K6728 "Testing methods for polyvinyl butyral" were exhibited.

### (Example 1)

Preparation of Composition X for forming first layer:
One hundred parts by weight of a polyvinyl acetal resin (a polyvinyl butyral (PVB) resin, the average polymerization degree of polyvinyl alcohol (PVA) of 1700, the hydroxyl content of 32.6% by mol, the acetylation degree of 0.7% by mol, the butyralization degree of 66.7% by mol) and 30 parts by weight of triethylene glycol di-2-ethylhexanoate (3GO), which is a plasticizer, were mixed to obtain Composition X for forming a first layer.

Preparation of Composition Y for forming second layer and third layer:
To 40 parts by weight of triethylene glycol di-2-ethylhexanoate (3GO), which is a plasticizer, a mixture of magnesium acetate and magnesium 2-ethylbutyrate (the mixing ratio of magnesium acetate : magnesium 2-ethylbutyrate = 50% by weight : 50% by weight) was added, and the contents were mixed to prepare a plasticizer solution. The amount of the mixture of magnesium acetate and magnesium 2-ethylbutyrate added was adjusted so that the concentration of the magnesium element in the second layer and the third layer becomes 50 ppm.

One hundred parts by weight of a polyvinyl acetal resin (a polyvinyl butyral (PVB) resin, the average polymerization degree of polyvinyl alcohol (PVA) of 1700, the hydroxyl content of 30.6% by mol, the acetylation degree of 1.0% by mol, the butyralization degree of 68.4% by mol) and the whole amount of the plasticizer solution were mixed to obtain Composition Y for forming a second layer and a third layer.

Preparation of interlayer film:
By co-extruding the Composition X for forming a first layer and the Composition Y for forming a second layer and a third layer using a coextruder, an interlayer film (580 µm in thickness) having a layered structure with a stack of a second layer (100 µm in thickness)/a first layer (380 µm in thickness)/a third layer (100 µm in thickness) was prepared.

Preparation of laminated glass:
The obtained interlayer film (multilayer) was cut into a size of 35 cm in length × 35 cm in width. Next, the interlayer film was sandwiched between two sheets of clear glass (30 cm in length × 30 cm in width × 2.5 mm in thickness), the product was held in a vacuum laminator for 30 minutes at 90°C and pressed under vacuum to obtain a laminate. With regard to the laminate, interlayer film portions protruded from the glass plate were cut away to obtain a sheet of laminated glass.

### (Examples 2 to 20)

An interlayer film and a sheet of laminated glass were prepared in the same manner as in Example 1 except that the kind and content of a polyvinyl acetal resin, the kind and content of a plasticizer and respective thicknesses of the first layer, the second layer and the third layer were set to those listed in the following Tables 2 and 3.

### (Comparative Example 1)

Preparation of Composition X for forming first layer:
One hundred parts by weight of a polyvinyl acetal resin (a polyvinyl butyral (PVB) resin, the average polymerization degree of polyvinyl alcohol (PVA) of 1700, the hydroxyl content of 31.0% by mol, the acetylation degree of 1.0% by mol, the butyralization degree of 68.0% by mol) and 40 parts by weight of triethylene glycol di-2-ethylhexanoate (3GO), which is a plasticizer, were mixed to obtain Composition X for forming a first layer.

Preparation of Composition Y for forming second layer and third layer:
To 40 parts by weight of triethylene glycol di-2-ethylhexanoate (3GO), which is a plasticizer, a mixture of magnesium acetate and magnesium 2-ethylbutyrate (the mixing ratio of magnesium acetate : magnesium 2-ethylbutyrate = 50% by weight : 50% by weight) was added, and the contents were mixed to prepare a plasticizer solution. The amount of the mixture of magnesium acetate and magnesium 2-ethylbutyrate added was adjusted so that the concentration of the magnesium element in the second layer and the third layer becomes 65 ppm.

One hundred parts by weight of a polyvinyl acetal resin (a polyvinyl butyral (PVB) resin, the average polymerization degree of polyvinyl alcohol (PVA) of 1700, the hydroxyl content of 31.0% by mol, the acetylation degree of 1.0% by mol, the butyralization degree of 68.0% by mol) and the whole amount of the plasticizer solution were mixed to obtain Composition Y for forming a second layer and a third layer.

Preparation of interlayer film:
By co-extruding the Composition X for forming a first layer and the Composition Y for forming a second layer and a third layer using a coextruder, an interlayer film (580 µm in thickness) having a layered structure with a stack of a second layer (100 µm in thickness)/a first layer (380 µm in thickness)/a third layer (100 µm in thickness) was prepared.

The interlayer film was cut along the line of the shortest distance X between one end and the other end in the direction (widthwise direction) perpendicular to the extruding direction of the interlayer film obtained, and the thickness of the first layer, the thickness of the second layer and the thickness of the third layer each were measured at points positioned at distances of 0.1X from one end, 0.5X from one end (0.5X from the other end) and 0.9X from one end (0.1X from the other end) . With regard to the average values of the thickness of the first layer, the thickness of the second layer and the thickness of the third layer, the average value of the thickness of the first layer was determined to be 380 µm, the average value of the thickness of the second layer was determined to be 100 µm, and the average value of the thickness of the third layer was determined to be 100 µm. The measurement of the thickness was performed by arranging the cut interlayer film on an LED lighting device CUBIC 300 and observing the cut part with an optical microscope ("Digital Microscope VHX-100" available from KEYENCE CORPORATION).

### (Comparative Examples 2 to 5)

An interlayer film and a sheet of laminated glass were prepared in the same manner as in Example 1 except that the kind and content of a polyvinyl acetal resin, the kind and content of a plasticizer and respective thicknesses of the first layer, the second layer and the third layer were set to those listed in the following Table 4.

Preparation of laminated glass:
A sheet of laminated glass was prepared in the same manner as in Example 1 except that the obtained interlayer film was used.

### (Evaluation)

### (1) Measurement of pummel value of laminated glass

The obtained sheet of laminated glass was stored at -18°C±0.6°C for 16 hours, the center part of this sheet of laminated glass (the part of 150 mm in length × 150 cm in width) was struck by a hammer with a head of 0.45 kg until the glass was broken into pieces having a particle diameter less than or equal to 6 mm, the degree of exposure of the film which was measured after the glass partially peeled off was measured, and the pummel value was determined according to the following Table 1. The pummel value is a value with which the adhesive force between an interlayer film for laminated glass and a glass plate is evaluated, the pummel value is a value specified by the degree of exposure (% by area) of the film measured after storing the sheet of laminated glass at -18°C±0.6°C for 16 hours, striking the center part of this sheet of laminated glass (the part of 150 mm in length × 150 mm in width) by a hammer with a head of 0.45 kg until the glass is broken into pieces having a particle diameter less than or equal to 6 mm, and allowing the glass to partially peel off, and the pummel value is defined in Table 1. That is, the higher the pummel value is, the higher the adhesive force between the interlayer film and the glass is, and this means that the laminated glass is excellent in anti-scattering properties of glass fragments.

**[Table 1]**

| Degree of exposure of interlayer film (% by area) | Pummel value |
|---|---|
| 90 < Degree of exposure ≦ 100 | **0** |
| 85 < Degree of exposure ≤ 90 | **1** |
| 60 < Degree of exposure ≦ 85 | **2** |
| 40 < Degree of exposure ≦ 60 | **3** |
| 20 < Degree of exposure ≦ 40 | **4** |
| 10 < Degree of exposure ≦ 20 | **5** |
| 5 < Degree of exposure ≦ 10 | **6** |
| 2 < Degree of exposure ≦ 5 | **7** |
| Degree of exposure ≦ 2 | **8** |

### (2) Penetration resistance

The surface temperature of the sheet of laminated glass (30 cm in length × 30 cm in width) obtained was adjusted to 23°C. Then, in accordance with JIS R3212: 1998, a rigid sphere with a mass of 2260 g and a diameter of 82 mm was dropped at the center part of each of six sheets of laminated glass from a height of 4 m. In the case where the rigid sphere did not penetrate through each of all the six sheets of laminated glass within 5 seconds after the rigid sphere collided therewith, the laminated glass was considered to be accepted. In the case where sheets of laminated glass through each of which the rigid sphere did not penetrate within 5 seconds after the rigid sphere collided therewith were three or less sheets, the laminated glass was considered to be failed. In the case of four sheets, another six sheets of laminated glass were evaluated for the penetration resistance. In the case of five sheets, another sheet of laminated glass was additionally tested. In the case where the rigid sphere did not penetrate through the sheet of laminated glass within 5 seconds after the rigid sphere collided therewith, the laminated glass was considered to be accepted. In the same manner, a rigid sphere with a mass of 2260 g and a diameter of 82 mm was dropped at the center part of each of six sheets of laminated glass from a height of 4.5 m, 5.0 m, 5.5 m or 6.0 m to evaluate the penetration resistance of laminated glass.

### (3) Evaluation of head form

Preparation of laminated glass:
The obtained interlayer film (multilayer) was cut into a size of 1100 mm in length × 500 mm in width. Next, the interlayer film was sandwiched between two sheets of clear glass (1100 mm in length × 500 mm in width × 2.5 mm in thickness), the product was held in a vacuum laminator for 30 minutes at 90°C and pressed under vacuum to obtain a laminate. With regard to the laminate, interlayer film portions protruded from the sheet of glass were cut away to obtain a sheet of laminated glass for evaluation of head form.

In accordance with JIS R3212: 1998, a head form test was performed using a human head model (which has a mass of 10±0.2 kg) and a support frame for fixing a laminated glass sample. The laminated glass obtained was stored at 23±2°C for at least 4 hours until just before the test. Each of four sheets of laminated glass was subjected to a test in which the human head model was dropped only once from a height of 4 m. The dropped point was set so as to be positioned within a distance of 40 mm from the geometrical center of the laminated glass. With regard to the following four items, the state of laminated glass after the human head model was dropped was observed. 1) Many concentrically shaped cracks centered on the dropped point are generated, and the crack generated nearest to the dropped point is positioned within a distance of 80 mm from the dropped point. 2) The glass and the interlayer film are bonded together. However, there may be a case where exfoliation with a width shorter than 4 mm is generated at the outer side 60 mm away from the center of the dropped point. 3) The exposed surface area of the interlayer film is not greater than 20 cm² in the surface onto which the human head model was dropped. 4) The length of a fissure in the interlayer film is shorter than or equal to 35 mm. By being checked against the foregoing four items, the head form was judged according to the following criteria.

### [Criteria for judgment in head form]

○○: Three or more sheets of the four sheets satisfy all the items 1) to 4).
○: Two sheets of the four sheets satisfy all the items 1) to 4) .
Δ: One sheet of the four sheets satisfies all the items 1) to 4) .
×: None of the four sheets satisfy all the items 1) to 4) .

The results are shown in the following Tables 2 to 4.

**[Table 2]**

| | | | | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|---|---|
| Composition of first layer | Polyvinyl acetal resin | Thickness | *µ*m | 380 | 380 | 380 | 100 | 160 | 260 | 260 | 260 | 160 | 160 |
| | | Average polymerization degree of PVA | | 1700 | 1700 | 1700 | 1700 | 1700 | 1700 | 1700 | 1700 | 1700 | 1700 |
| | | Hydroxyl content | % by mol | 32.6 | 33.4 | 35.4 | 35.4 | 35.4 | 35.4 | 32.6 | 33.4 | 35.4 | 35.4 |
| | | Acetylation degree | % by mol | 0.7 | 0.9 | 0.8 | 0.8 | 0.8 | 0.8 | 0.7 | 0.9 | 0.8 | 0.8 |
| | | Butyralization degree | % by mol | 66.7 | 65.8 | 63.9 | 63.9 | 63.9 | 63.9 | 66.7 | 65.8 | 63.9 | 63.9 |
| | | Content | weight | 100 | 100 | 100 | 100 | 100 | 100 | 100 | 100 | 100 | 100 |
| | Plasticizer | Kind | | 3GO | 3GO | 3GO | 3GO | 3GO | 3GO | 3GO | 3GO | 3GO | 3GO |
| | | Content | Parts by weigh | 30 | 30 | 30 | 30 | 30 | 30 | 30 | 30 | 30 | 30 |
| Composition of each of second and third layers | Polyvinyl acetal resin | Thickness | *µ*m | 100 | 100 | 100 | 240 | 210 | 160 | 160 | 160 | 210 | 210 |
| | | Average polymerization degree of PVA | | 1700 | 1700 | 1700 | 1700 | 1700 | 1700 | 1700 | 1700 | 1700 | 1700 |
| | | Hydroxyl content | % by mol | 30.6 | 30.6 | 30.6 | 30.6 | 30.6 | 30.6 | 30.6 | 30.6 | 30.6 | 30.6 |
| | | Acetylation degree | % by mol | 1.0 | 1.0 | 1.0 | 1.0 | 1.0 | 1.0 | 1.0 | 1.0 | 1.0 | 1.0 |
| | | Butyralization degree | % by mol | 68.4 | 68.4 | 68.4 | 68.4 | 68.4 | 68.4 | 68.4 | 68.4 | 68.4 | 68.4 |
| | | Content | Parts by weight | 100 | 100 | 100 | 100 | 100 | 100 | 100 | 100 | 100 | 100 |
| | Plasticizer | Kind | | 3GO | 3GO | 3GO | 3GO | 3GO | 3GO | 3GO | 3GO | 3GO | 3GO |
| | | Content | Parts by weight | 40 | 40 | 40 | 40 | 40 | 40 | 40 | 40 | 45 | 33 |
| | Concentration of magnesium element | | ppm | 50 | 50 | 50 | 50 | 50 | 50 | 50 | 50 | 50 | 50 |
| Evaluation | Pummel value | | | 4 | 4 | 5 | 5 | 5 | 5 | 4 | 4 | 5 | 5 |
| | Penetration resistance | | 4m | Accepted | Accepted | Accepted | Accepted | Accepted | Accepted | Accepted | Accepted | Accepted | Accepted |
| | | | 4.5m | Accepted | Accepted | Accepted | Accepted | Accepted | Accepted | Accepted | Accepted | Accepted | Accepted |
| | | | 5m | Accepted | Accepted | Accepted | Accepted | Accepted | Accepted | Accepted | Accepted | Accepted | Accepted |
| | | | 5.5m | Accepted | Accepted | Accepted | Accepted | Accepted | Accepted | Accepted | Accepted | Accepted | Accepted |
| | | | 6m | Accepted | Accepted | Accepted | Accepted | Accepted | Accepted | Accepted | Accepted | Accepted | Accepted |
| | Head form | | | Δ | Δ | Δ | ○○ | ○○ | ○ | ○ | ○ | ○○ | ○ |

**[Table 3]**

| | | | | Ex. 11 | Ex. 12 | Ex. 13 | Ex. 14 | Ex. 15 | Ex. 16 | Ex. 17 | Ex. 18 | Ex. 19 | Ex. 20 |
|---|---|---|---|---|---|---|---|---|---|---|---|---|---|
| Composition of first layer | Polyvinyl acetal resin | Thickness | *µ*m | 160 | 160 | 160 | 100 | 160 | 260 | 380 | 380 | 380 | 380 |
| | | Average polymerization degree of PVA | | 1700 | 1700 | 1700 | 1700 | 1700 | 1700 | 1700 | 1700 | 1700 | 1700 |
| | | Hydroxyl content | % by mol | 35.4 | 35.4 | 35.4 | 31.1 | 31.1 | 31.1 | 31.1 | 32.6 | 33.4 | 35.4 |
| | | Acetylation degree | % by mol | 0.8 | 0.8 | 0.8 | 0.8 | 0.8 | 0.8 | 0.8 | 0.7 | 0.9 | 0.8 |
| | | Butyralization degree | % by mol | 63.9 | 63.9 | 63.9 | 68.1 | 68.1 | 68.1 | 68.1 | 66.7 | 65.8 | 63.9 |
| | | Content | Parts by weight | 100 | 100 | 100 | 100 | 100 | 100 | 100 | 100 | 100 | 100 |
| | Plasticizer | Kind | | 3GO | 3GO | 3GO | 3GO | 3GO | 3GO | 3GO | 3GO | 3GO | 3GO |
| | | Content | Parts by weight | 30 | 20 | 35 | 30 | 30 | 30 | 30 | 30 | 30 | 30 |
| Composition of each of second and third layers | Polyvinyl acetal resin | Thickness | *µ*m | 210 | 210 | 210 | 240 | 210 | 160 | 100 | 100 | 100 | 100 |
| | | Average polymerization degree of PVA | | 1700 | 1700 | 1700 | 1700 | 1700 | 1700 | 1700 | 1700 | 1700 | 1700 |
| | | Hydroxyl content | % by mol | 30.6 | 30.6 | 30.6 | 30.6 | 30.6 | 30.6 | 30.6 | 30.6 | 30.6 | 30.6 |
| | | Acetylation degree | % by mol | 1.0 | 1.0 | 1.0 | 1.0 | 1.0 | 1.0 | 1.0 | 1.0 | 1.0 | 1.0 |
| | | Butyralization degree | % by mol | 68.4 | 68.4 | 68.4 | 68.4 | 68.4 | 68.4 | 68.4 | 68.4 | 68.4 | 68.4 |
| | | Content | Parts by weight | 100 | 100 | 100 | 100 | 100 | 100 | 100 | 100 | 100 | 100 |
| | Plasticizer | Kind | | 3GO | 3GO | 3GO | 3GO | 3GO | 3GO | 3GO | 3GO | 3GO | 3GO |
| | | Content | Parts weight by | 35 | 40 | 40 | 30 | 30 | 30 | 30 | 30 | 30 | 30 |
| | Concentration of magnesium element | | ppm | 50 | 50 | 50 | 50 | 50 | 50 | 50 | 50 | 50 | 50 |
| Evaluation | Pummel value | | | 5 | 5 | 5 | 4 | 4 | 4 | 4 | 4 | 4 | 5 |
| | Penetration resistance | | 4m | Accepted | Accepted | Accepted | Accepted | Accepted | Accepted | Accepted | Accepted | Accepted | Accepted |
| | | | 4.5m | Accepted | Accepted | Accepted | Accepted | Accepted | Accepted | Accepted | Accepted | Accepted | Accepted |
| | | | 5m | Accepted | Accepted | Accepted | Accepted | Accepted | Accepted | Accepted | Accepted | Accepted | Accepted |
| | | | 5.5m | Accepted | Accepted | Accepted | Accepted | Accepted | Accepted | Accepted | Accepted | Accepted | Accepted |
| | | | 6m | Accepted | Accepted | Accepted | Accepted | Accepted | Accepted | Accepted | Accepted | Accepted | Accepted |
| | Head form | | | ○ | ○ | ○ | × | × | × | × | × | × | × |

**[Table 4]**

| | | | | Comp. Ex. 1 | Comp. Ex. 2 | Comp. Ex. 3 | Comp. Ex. 4 | Comp. Ex. 5 |
|---|---|---|---|---|---|---|---|---|
| Composition of first layer | Polyvinyl acetal resin | Thickness | *µ*m | 380 | 380 | 100 | 100 | 100 |
| | | Average polymerization degree of PVA | | 1700 | 1700 | 1700 | 2300 | 3000 |
| | | Hydroxyl content | % by mol | 31.0 | 31.0 | 23.2 | 23.5 | 23.0 |
| | | Acetylation degree | % by mol | 1.0 | 1.0 | 12.0 | 12.0 | 12.0 |
| | | Butyralization degree | % by mol | 68.0 | 68.0 | 64.8 | 64.5 | 65.0 |
| | | Content | Parts by weight | 100 | 100 | 100 | 100 | 100 |
| | Plasticizer | Kind | | 3GO | 3GO | 3GO | 3GO | 3GO |
| | | Content | Parts by weight | 40 | 40 | 60 | 60 | 60 |
| Composition of each of second and third layers | Polyvinyl acetal resin | Thickness | *µ*m | 100 | 100 | 240 | 240 | 240 |
| | | Average polymerization degree of PVA | | 1700 | 1700 | 1700 | 1700 | 1700 |
| | | Hydroxyl content | % by mol | 31.0 | 31.0 | 31.0 | 31.0 | 31.0 |
| | | Acetylation degree | % by mol | 1.0 | 1.0 | 1.0 | 1.0 | 1.0 |
| | | Butyralization degree | % by mol | 68.0 | 68.0 | 68.0 | 68.0 | 68.0 |
| | | Content | Parts by weight | 100 | 100 | 100 | 100 | 100 |
| | Plasticizer | Kind | | 3GO | 3GO | 3GO | 3GO | 3GO |
| | | Content | Parts by weight | 40 | 40 | 40 | 40 | 40 |
| | Concentration of magnesium element | | ppm | 65 | 50 | 50 | 50 | 50 |
| Evaluation | Pummel value | | | 5 | 5 | 5 | 5 | 5 |
| | Penetration resistance | | 4m | Accepted | Accepted | Accepted | Accepted | Accepted |
| | | | 4.5m | Failed | Failed | Failed | Failed | Failed |
| | | | 5m | Failed | Failed | Failed | Failed | Failed |
| | | | 5.5m | Failed | Failed | Failed | Failed | Failed |
| | | | 6m | Failed | Failed | Failed | Failed | Failed |
| | Head form | | | ○○ | ○○ | ○○ | ○○ | ○○ |

### EXPLANATION OF SYMBOLS

1: Interlayer film
1a: First surface
1b: Second surface
2: First layer
2a: First surface
2b: Second surface
3: Second layer
3a: Outer surface
4: Third layer
4a: Outer surface
11: Laminated glass
21: First laminated glass member
22: Second laminated glass member

## Claims

1. An interlayer film for laminated glass, comprising:
a first layer including a polyvinyl acetal resin and a plasticizer,
a second layer being arranged on a first surface side of the first layer and including a polyvinyl acetal resin and a plasticizer, and
a third layer being arranged on a second surface side opposite to the first surface of the first layer and including a polyvinyl acetal resin and a plasticizer;
wherein a hydroxyl content of the polyvinyl acetal resin included in the first layer is higher than a hydroxyl content of the polyvinyl acetal resin included in the second layer,
an absolute value of the difference between the hydroxyl content of the polyvinyl acetal resin included in the first layer and the hydroxyl content of the polyvinyl acetal resin included in the second layer is greater than or equal to 1% by mol,
an acetylation degree of the polyvinyl acetal resin included in the second layer is less than or equal to 2% by mol,
a content of the plasticizer included in the first layer relative to 100 parts by weight of the polyvinyl acetal resin included in the first layer is less than a content of the plasticizer included in the second layer relative to 100 parts by weight of the polyvinyl acetal resin included in the second layer, and
an absolute value of the difference between the content of the plasticizer included in the first layer relative to 100 parts by weight of the polyvinyl acetal resin included in the first layer and the content of the plasticizer included in the second layer relative to 100 parts by weight of the polyvinyl acetal resin included in the second layer is greater than or equal to 8 parts by weight.

2. The interlayer film for laminated glass according to claim 1, wherein the hydroxyl content of the polyvinyl acetal resin included in the first layer is higher than the hydroxyl content of the polyvinyl acetal resin included in the third layer, and the content of the plasticizer included in the first layer relative to 100 parts by weight of the polyvinyl acetal resin included in the first layer is less than a content of the plasticizer included in the third layer relative to 100 parts by weight of the polyvinyl acetal resin included in the third layer.

3. The interlayer film for laminated glass according to claim 1 or 2, wherein the hydroxyl content of the polyvinyl acetal resin included in the first layer is greater than or equal to 32% by mol.

4. The interlayer film for laminated glass according to any one of claims 1 to 3, wherein a thickness of the interlayer film for laminated glass is less than or equal to 700 µm.

5. The interlayer film for laminated glass according to any one of claims 1 to 4, wherein an absolute value of the difference between the hydroxyl content of the polyvinyl acetal resin included in the first layer and the hydroxyl content of the polyvinyl acetal resin included in the second layer is greater than or equal to 2% by mol.

6. The interlayer film for laminated glass according to claim 5, wherein the absolute value of the difference between the hydroxyl content of the polyvinyl acetal resin included in the first layer and the hydroxyl content of the polyvinyl acetal resin included in the second layer is greater than 3% by mol.

7. The interlayer film for laminated glass according to any one of claims 1 to 6, wherein the hydroxyl content of the polyvinyl acetal resin included in the first layer is greater than 34% by mol.

8. The interlayer film for laminated glass according to any one of claims 1 to 6, wherein the hydroxyl content of the polyvinyl acetal resin included in the first layer is less than or equal to 33.9% by mol.

9. The interlayer film for laminated glass according to any one of claims 1 to 8, wherein the polyvinyl acetal resin included in the first layer is a polyvinyl butyral resin, and a butyralization degree of the polyvinyl butyral resin is greater than or equal to 61.5% by mol.

10. The interlayer film for laminated glass according to any one of claims 1 to 9, wherein the absolute value of the difference between the hydroxyl content of the polyvinyl acetal resin included in the first layer and the hydroxyl content of the polyvinyl acetal resin included in the second layer is less than or equal to 4.8% by mol.

11. The interlayer film for laminated glass according to any one of claims 1 to 10, wherein the absolute value of the difference between the content of the plasticizer included in the first layer relative to 100 parts by weight of the polyvinyl acetal resin included in the first layer and the content of the plasticizer included in the second layer relative to 100 parts by weight of the polyvinyl acetal resin included in the second layer is greater than or equal to 8.1 parts by weight.

12. The interlayer film for laminated glass according to any one of claims 1 to 11, wherein when the thickness of the interlayer film for laminated glass is defined as T, a thickness of the first layer is greater than or equal to 0.14T.

13. The interlayer film for laminated glass according to any one of claims 1 to 12, wherein the thickness of the interlayer film for laminated glass is less than or equal to 700 µm, and the thickness of the first layer is thinner than the thickness of the second layer.

14. Laminated glass, comprising:
a first laminated glass member,
a second laminated glass member, and
the interlayer film for laminated glass according to any one of claims 1 to 13,
wherein the interlayer film for laminated glass is arranged between the first laminated glass member and the second laminated glass member.

## Patentansprüche

1. Zwischenschichtfolie für Verbundglas, umfassend:
eine erste Schicht, die ein Polyvinylacetalharz und einen Weichmacher enthält,
eine zweite Schicht, die auf einer ersten Oberflächenseite der ersten Schicht angeordnet ist und ein Polyvinylacetalharz und einen Weichmacher enthält; und
eine dritte Schicht, die auf einer zweiten Oberflächenseite gegenüber der ersten Oberfläche der ersten Schicht angeordnet ist und ein Polyvinylacetalharz und einen Weichmacher enthält;
wobei ein Hydroxylgehalt des in der ersten Schicht enthaltenen Polyvinylacetalharzes höher ist als ein Hydroxylgehalt des in der zweiten Schicht enthaltenen Polyvinylacetalharzes,
ein Absolutwert der Differenz zwischen dem Hydroxylgehalt des in der ersten Schicht enthaltenen Polyvinylacetalharzes und dem Hydroxylgehalt des in der zweiten Schicht enthaltenen Polyvinylacetalharzes größer oder gleich 1 Mol-% ist,
ein Acetylierungsgrad des in der zweiten Schicht enthaltenen Polyvinylacetalharzes kleiner oder gleich 2 Mol-% ist,
ein Gehalt des in der ersten Schicht enthaltenen Weichmachers bezogen auf 100 Gewichtsteile des in der ersten Schicht enthaltenen Polyvinylacetalharzes geringer ist als ein Gehalt des in der zweiten Schicht enthaltenen Weichmachers bezogen auf 100 Gewichtsteile des in der zweiten Schicht enthaltenen Polyvinylacetalharzes, und
ein Absolutwert der Differenz zwischen dem Gehalt des in der ersten Schicht enthaltenen Weichmachers bezogen auf 100 Gewichtsteile des in der ersten Schicht enthaltenen Polyvinylacetalharzes und der Gehalt des in der zweiten Schicht enthaltenen Weichmachers, bezogen auf 100 Gewichtsteile des in der zweiten Schicht enthaltenen Polyvinylacetalharzes, größer oder gleich 8 Gewichtsteile ist.

2. Zwischenschichtfolie für Verbundglas nach Anspruch 1, wobei der Hydroxylgehalt des in der ersten Schicht enthaltenen Polyvinylacetalharzes höher ist als der Hydroxylgehalt des in der dritten Schicht enthaltenen Polyvinylacetalharzes, und
der Gehalt des in der ersten Schicht enthaltenen Weichmachers, bezogen auf 100 Gewichtsteile des in der ersten Schicht enthaltenen Polyvinylacetalharzes, geringer ist als ein Gehalt des in der dritten Schicht enthaltenen Weichmachers bezogen auf 100 Gewichtsteile des in der dritten Schicht enthaltenen Polyvinylacetalharzes.

3. Zwischenschichtfolie für Verbundglas nach Anspruch 1 oder 2, wobei der Hydroxylgehalt des in der ersten Schicht enthaltenen Polyvinylacetalharzes größer oder gleich 32 Mol-% ist.

4. Zwischenschichtfolie für Verbundglas nach einem der Ansprüche 1 bis 3, wobei eine Dicke der Zwischenschichtfolie für Verbundglas kleiner oder gleich 700 µm ist.

5. Zwischenschichtfolie für Verbundglas nach einem der Ansprüche 1 bis 4, wobei ein Absolutwert der Differenz zwischen dem Hydroxylgehalt des in der ersten Schicht enthaltenen Polyvinylacetalharzes und dem Hydroxylgehalt des in der zweiten Schicht enthaltenen Polyvinylacetalharzes größer oder gleich 2 Mol-% ist.

6. Zwischenschichtfolie für Verbundglas nach Anspruch 5, wobei der Absolutwert der Differenz zwischen dem Hydroxylgehalt des in der ersten Schicht enthaltenen Polyvinylacetalharzes und dem Hydroxylgehalt des in der zweiten Schicht enthaltenen Polyvinylacetalharzes größer als 3 Mol-% ist.

7. Zwischenschichtfolie für Verbundglas nach einem der Ansprüche 1 bis 6, wobei der Hydroxylgehalt des in der ersten Schicht enthaltenen Polyvinylacetalharzes größer als 34 Mol-% ist.

8. Zwischenschichtfolie für Verbundglas nach einem der Ansprüche 1 bis 6, wobei der Hydroxylgehalt des in der ersten Schicht enthaltenen Polyvinylacetalharzes kleiner oder gleich 33,9 Mol-% ist.

9. Zwischenschichtfolie für Verbundglas nach einem der Ansprüche 1 bis 8, wobei das in der ersten Schicht enthaltene Polyvinylacetalharz ein Polyvinylbutyralharz ist und ein Butyralisierungsgrad des Polyvinylbutyralharzes größer oder gleich 61,5 Mol-% ist.

10. Zwischenschichtfolie für Verbundglas nach einem der Ansprüche 1 bis 9, wobei der Absolutwert der Differenz zwischen dem Hydroxylgehalt des in der ersten Schicht enthaltenen Polyvinylacetalharzes und dem Hydroxylgehalt des in der zweiten Schicht enthaltenen Polyvinylacetalharzes kleiner oder gleich 4,8 Mol-% ist.

11. Zwischenschichtfolie für Verbundglas nach einem der Ansprüche 1 bis 10, wobei der Absolutwert der Differenz zwischen dem Gehalt des in der ersten Schicht enthaltenen Weichmachers bezogen auf 100 Gewichtsteile des in der ersten Schicht enthaltenen Polyvinylacetalharzes und der Gehalt des in der zweiten Schicht enthaltenen Weichmachers, bezogen auf 100 Gewichtsteile des in der zweiten Schicht enthaltenen Polyvinylacetalharzes, größer oder gleich 8,1 Gewichtsteile ist.

12. Zwischenschichtfolie für Verbundglas nach einem der Ansprüche 1 bis 11, wobei, wenn die Dicke der Zwischenschichtfolie für Verbundglas als T definiert ist, eine Dicke der ersten Schicht größer oder gleich 0,14T ist.

13. Zwischenschichtfolie für Verbundglas nach einem der Ansprüche 1 bis 12, wobei die Dicke der Zwischenschichtfolie für Verbundglas kleiner oder gleich 700 µm ist und die Dicke der ersten Schicht dünner als die Dicke der zweiten ist Schicht ist.

14. Verbundglas, umfassend:
ein erstes Verbundglaselement,
ein zweites Verbundglaselement, und
die Zwischenschichtfolie für Verbundglas nach einem der Ansprüche 1 bis 13,
wobei die Zwischenschichtfolie für Verbundglas zwischen dem ersten Verbundglaselement und dem zweiten Verbundglaselement angeordnet ist.

## Revendications

1. Film intercouche pour verre feuilleté, comportant :
une première couche incluant une résine de polyacétal de vinyle et un plastifiant,
une deuxième couche étant disposée sur un premier côté de surface de la première couche et incluant une résine de polyacétal de vinyle et un plastifiant, et
une troisième couche étant disposée sur un second côté de surface opposé à la première surface de la première couche et incluant une résine de polyacétal de vinyle et un plastifiant ;
dans lequel une teneur en hydroxyle de la résine de polyacétal de vinyle incluse dans la première couche est supérieure à une teneur en hydroxyle de la résine de polyacétal de vinyle incluse dans la deuxième couche,
une valeur absolue de la différence entre la teneur en hydroxyle de la résine de polyacétal de vinyle incluse dans la première couche et la teneur en hydroxyle de la résine de polyacétal de vinyle incluse dans la deuxième couche est supérieure ou égale à 1 % en mole,
un degré d'acétylation de la résine de polyacétal de vinyle incluse dans la deuxième couche est inférieur ou égal à 2 % en mole,
une teneur en plastifiant inclus dans la première couche rapportée à 100 parties en poids de la résine de polyacétal de vinyle dans la première couche est inférieure à une teneur en plastifiant inclus dans la deuxième couche rapportée à 100 parties en poids de la résine de polyacétal de vinyle incluse dans la deuxième couche, et
une valeur absolue de la différence entre la teneur en plastifiant inclus dans la première couche rapportée à 100 parties en poids de la résine de polyacétal de vinyle incluse dans la première couche et la teneur en plastifiant inclus dans la deuxième couche rapportée à 100 parties en poids de la résine de polyacétal de vinyle incluse dans la deuxième couche est supérieure ou égale à 8 parties en poids.

2. Film intercouche pour verre feuilleté selon la revendication 1, dans lequel la teneur en hydroxyle de la résine de polyacétal de vinyle incluse dans la première couche est supérieure à la teneur en hydroxyle de la résine de polyacétal de vinyle incluse dans la troisième couche, et
la teneur en plastifiant inclus dans la première couche rapportée à 100 parties en poids de la résine de polyacétal de vinyle incluse dans la première couche est inférieure à une teneur en plastifiant inclus dans la troisième couche rapportée à 100 parties en poids de la résine de polyacétal de vinyle incluse dans la troisième couche.

3. Film intercouche pour verre feuilleté selon la revendication 1 ou 2, dans lequel la teneur en hydroxyle de la résine de polyacétal de vinyle incluse dans la première couche est supérieure ou égale à 32 % en mole.

4. Film intercouche pour verre feuilleté selon l'une quelconque des revendications 1 à 3, dans lequel une épaisseur du film intercouche pour verre feuilleté est inférieure ou égale à 700 µm.

5. Film intercouche pour verre feuilleté selon l'une quelconque des revendications 1 à 4, dans lequel une valeur absolue de la différence entre la teneur en hydroxyle de la résine de polyacétal de vinyle incluse dans la première couche et de la teneur en hydroxyle de la résine de polyacétal de vinyle incluse dans la deuxième couche est supérieure ou égale à 2 % en mole.

6. Film intercouche pour verre feuilleté selon la revendication 5, dans lequel la valeur absolue de la différence entre la teneur en hydroxyle de la résine de polyacétal de vinyle incluse dans la première couche et de la teneur en hydroxyle de la résine de polyacétal de vinyle incluse dans la deuxième couche est supérieure à 3 % en mole.

7. Film intercouche pour verre feuilleté selon l'une quelconque des revendications 1 à 6, dans lequel la teneur en hydroxyle de la résine de polyacétal de vinyle incluse dans la première couche est supérieure à 34 % en mole.

8. Film intercouche pour verre feuilleté selon l'une quelconque des revendications 1 à 6, dans lequel la teneur en hydroxyle de la résine de polyacétal de vinyle incluse dans la première couche est inférieure ou égale à 33,9 % en mole.

9. Film intercouche pour verre feuilleté selon l'une quelconque des revendications 1 à 8, dans lequel la résine de polyacétal de vinyle incluse dans la première couche est une résine de polybutyral de vinyle, et un degré de butyralisation de la résine de polybutyral de vinyle est supérieur ou égal à 61,5 % en mole.

10. Film intercouche pour verre feuilleté selon l'une quelconque des revendications 1 à 9, dans lequel la valeur absolue de la différence entre la teneur en hydroxyle de la résine de polyacétal de vinyle incluse dans la première couche et la teneur en hydroxyle de la résine de polyacétal de vinyle incluse dans la deuxième couche est inférieure ou égale à 4,8 % en mole.

11. Film intercouche pour verre feuilleté selon l'une quelconque des revendications 1 à 10, dans lequel la valeur absolue de la différence entre la teneur en plastifiant inclus dans la première couche rapportée à 100 parties en poids de la résine de polyacétal de vinyle incluse dans la première couche et la teneur en plastifiant inclus dans la deuxième couche rapportée à 100 parties en poids de la résine de polyacétal de vinyle incluse dans la deuxième couche est supérieure ou égale à 8,1 parties en poids.

12. Film intercouche pour verre feuilleté selon l'une quelconque des revendications 1 à 11, dans lequel lorsque l'épaisseur du film intercouche pour verre feuilleté est définie par T, une épaisseur de la première couche est supérieure ou égale à 0,14 T.

13. Film intercouche pour verre feuilleté selon l'une quelconque des revendications 1 à 12, dans lequel l'épaisseur du film intercouche pour verre feuilleté est inférieure ou égale à 700 µm, et l'épaisseur de la première couche est plus fine que l'épaisseur de la deuxième couche.

14. Verre feuilleté, comportant :
un premier élément de verre de feuilletage,
un second élément de verre de feuilletage, et
le film intercouche pour verre feuilleté selon l'une quelconque des revendications 1 à 13,
dans lequel le film intercouche pour verre feuilleté est disposé entre le premier élément de verre de feuilletage et le second élément de verre de feuilletage.
